# EUROPEAN PATENT APPLICATION

(11) **EP 4 546 526 A1**
(43) Date of publication of application: **30.04.2025**
(21) Application number: 23849626.9
(22) Date of filing: 20.09.2023
(51) Int. Cl.: H01M 50/24, H01M 50/207

(54) **BATTERY PACK**

(30) Priority: 04.08.2022 KR 20220097611
(71) Applicant: LG Energy Solution, Ltd., Seoul 07335 (KR)
(72) Inventor: KIM, Sang Jin, Daejeon 34122 (KR); LEE, Suk Hoon, Daejeon 34122 (KR); SEOL, Jae Jung, Daejeon 34122 (KR); BAEK, Seung Ryul, Daejeon 34122 (KR); KIM, Ji Hun, Daejeon 34122 (KR)
(74) Representative: Plasseraud IP
(86) International application number: PCT/IB2023/059289
(87) International publication number: WO 2024/028850

(57) **Abstract**

A battery pack according to an embodiment of the present invention includes a side cover, a front cover coupled to the side cover in a direction crossing the side cover, a top cover coupled to an upper portion of each of the side cover and the front cover, a first sealing member disposed along a first area that is a coupling area of the side cover and the front cover, and a second sealing member disposed along a second area that is a coupling area between the side and front covers and the top cover, wherein the first sealing member extends at a contact area with the second sealing member along a boundary between the side cover and the front cover.

## Description

### TECHNICAL FIELD

### CROSS-REFERENCE TO RELATED APPLICATION

The present application claims the benefit of the priority of Korean Patent Application 10-2022-0097611, filed on August 4, 2022, which is hereby incorporated by reference in its entirety.

### TECHNICAL FIELD

The present invention relates to a battery pack including a sealing member.

### BACKGROUND ART

In response to environmental pollution and depletion of petroleum resources, research and development on power generation based on Eco-friendly energy sources are being conducted. Particularly, research on secondary batteries is being actively conducted, and research is being conducted on various aspects such as materials, structures, processes, and systems of the secondary batteries.

Secondary batteries are assembled in modules and packs, and their stability is managed through a battery management system (BMS). In addition to voltage management through the BMS of the secondary battery, structural stability is important, and detailed design of a sealing structure for waterproof a module or pack is also required.

According to the related art, when three surfaces are coupled to form a pack, it is difficult to design the waterproof design due to a structure of a three surface-coupled portion itself. In addition, even if a sealing member is provided at the three surface-coupled portion, sealing on an area on which the three surfaces meet each other is weak, and thus, there is a risk of permeation of moisture.

### DISCLOSURE OF THE INVENTION

### TECHNICAL PROBLEM

An object of the present invention for solving the above problem is to provide a battery pack including a sealing member to improve sealing when three surfaces are coupled to each other.

### TECHNICAL SOLUTION

A battery pack according to an embodiment of the present invention includes a side cover, a front cover coupled to the side cover in a direction crossing the side cover, a top cover coupled to an upper portion of each of the side cover and the front cover, a first sealing member disposed along a first area that is a coupling area of the side cover and the front cover, and a second sealing member disposed along a second area that is a coupling area between the side and front covers and the top cover, wherein the first sealing member extends at a contact area with the second sealing member along a boundary between the side cover and the front cover.

### ADVANTAGEOUS EFFECTS

According to the preferred embodiment of the present invention, the sealing effect of the battery pack may be improved.

According to the preferred embodiment of the present invention, the sealing effect may be improved to suppress the permeation of the moisture or foreign substances into the battery pack, thereby improving the stability.

### BRIEF DESCRIPTION OF THE DRAWINGS

FIG. 1 is a perspective view of a battery pack according to an embodiment of the present invention.
FIG. 2 is an exploded perspective view of the battery pack according to an embodiment of the present invention.
FIG. 3 is an enlarged view illustrating a portion of the battery pack according to an embodiment of the present invention.
FIG. 4 is a plan view illustrating an arrangement relationship between a first sealing member and a second sealing member according to an embodiment of the present invention.
FIG. 5 is a perspective view illustrating a configuration of the first sealing member according to an embodiment of the present invention.
FIG. 6 is a perspective view illustrating a configuration of the second sealing member according to an embodiment of the present invention.
FIG. 7 is a plan view illustrating an arrangement relationship between a first sealing member and a second sealing member according to another embodiment of the present invention.
FIG. 8 is a perspective view illustrating a configuration of the first sealing member according to another embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

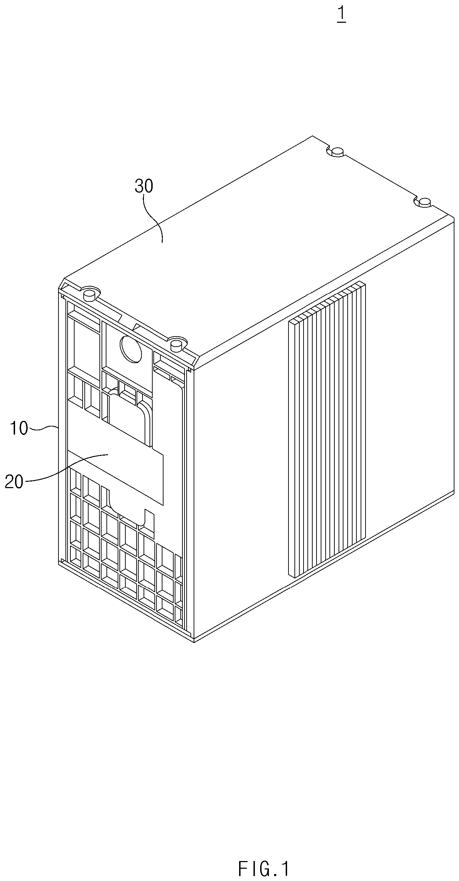

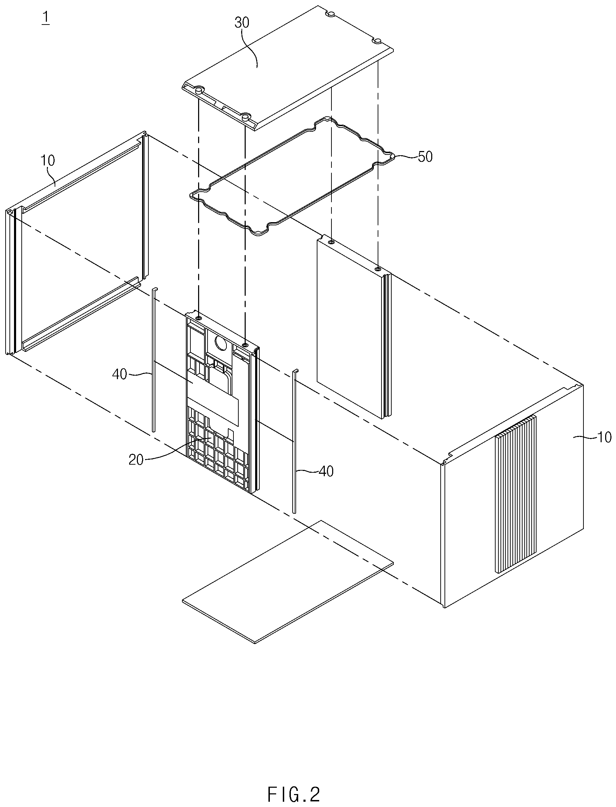

FIG. 1 is a perspective view of a battery pack 1 according to an embodiment of the present invention, and FIG. 2 is an exploded perspective view of the battery pack 1 according to an embodiment of the present invention.

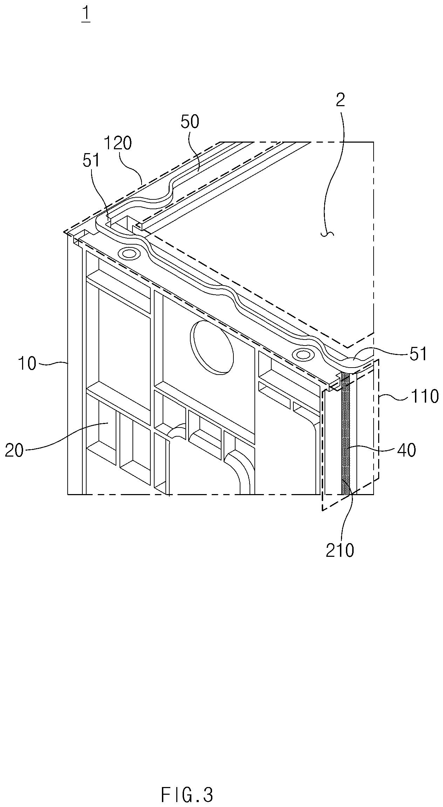

Referring to FIG. 1, the battery pack 1 may have an internal space (e.g., an internal space 2 in FIG. 3) in which batteries (or battery modules) are accommodated. The internal space may be surrounded by covers for separation from the outside.

The battery pack 1 may have a three surface-coupled shape of a side cover 10, a front cover 20, and a top cover 30. For example, the side cover 10 may define both surfaces of the battery pack 1, and the front cover 20 may define front and rear surfaces (or other surfaces other than both the surfaces). Specifically, for example, the front cover 20 may be coupled to the side cover 10 in a direction (e.g., a vertical direction) crossing the side cover 10. The top cover 30 may be coupled to an upper portion of each of the side cover 10 and the front cover 20.

The side cover 10, front cover 20, and top cover 30 may be three surface-coupled to each other to form a rectangular parallelepiped shape. For example, the side cover 20 may define a first surface and a second surface, which face each other, of side surfaces of the rectangular parallelepiped shape. The front cover 20 may define a third surface and a fourth surface, which face each other while crossing the first surface and the second surface, of the side surfaces of the rectangular parallelepiped shape. The top cover 30 may be coupled to an upper portion of each of the side cover 10 and the front cover 20 in a direction (or vertical direction) that crosses the first surface, the second surface, the third surface, and the fourth surface. In other words, the top cover 30 may define a top surface of the battery pack 1. Referring to FIG. 2, the battery pack 1 may include sealing members (e.g., a first sealing member 40 and a second sealing member 50).

For example, the first sealing member 40 may be disposed between the side cover 10 and the front cover 20. The first sealing member 40 may perform sealing between the side cover 10 and the front cover 20 to prevent external moisture, etc. from being introduced into the internal space (e.g., the internal space 2). The second sealing member 50 may be disposed between the side cover 10, the front cover 20, and the top cover 30. The second sealing member 50 may perform sealing between the side cover 10, the front cover 20, and the top cover 30 to prevent the external moisture, etc. from being introduced into the internal space (e.g., the internal space 2).

The first sealing member 40 and the second sealing member 50 may have a difference in hardness. For example, the hardness of the first sealing member 40 may be lower than that of the second sealing member 50. For example, the first sealing member 40 may be made of ethylene propylene rubber, and the second sealing member 50 may be made of polyurethane rubber, which has hardness lower than that of the ethylene propylene rubber. The rubber described above is only an example and is not limited thereto. As described above, when there is a difference in hardness between the first sealing member 40 and the second sealing member 50, formation of an empty space may be suppressed when the first sealing member 40 and the second sealing member 50 overlap each other to more effectively perform the sealing. In addition, a similar effect may be obtained even when the hardness of the first sealing member 40 is higher than that of the second sealing member 50.

FIG. 3 is an enlarged view illustrating a portion of the battery pack according to an embodiment of the present invention. The above description may be equally or similarly applied below.

The first sealing member 40 may be disposed on a first area 110. For example, an area on which the side cover 10 and the front cover 20 are coupled to each other may be defined as the first area 110. The first sealing member 40 may be disposed along the first area 110.

The first sealing member 40 may extend toward the internal space 2. For example, the side cover 10, the front cover 20, and the top cover 30 may define the internal space 2 that is capable of accommodating the battery. The first sealing member 40 may be disposed between the side cover 10 and the front cover 20, and at least a portion of the first sealing member 40 may extend toward the internal space 2. At least a portion of the first sealing member 40 may be a portion at a side of the top cover 30 of the first sealing member 40. When at least a portion of the first sealing member 40 extends toward the internal space 2, the at least a portion of the sealing member 40 may be limited to the extent of extension of a path through which moisture is permeated.

The first sealing member 40 may be mounted in a first mounting groove 210. For example, the first mounting groove 210 may be a groove provided in at least one of the side cover 10 or the front cover 20 so that the first sealing member 40 is mounted. In other words, the first mounting groove 210 may be defined in either the side cover 10 or the front cover 20 or may be defined in both the side cover 10 and the front cover 20. In addition, for example, the first mounting groove 210 may have a shape corresponding to that of the first sealing member 40.

The second sealing member 50 may be disposed on a second area 120. For example, an area on which the side cover 10 and the front cover 20 are coupled to the top cover 30 may be defined as the second area 120. The second sealing member 50 may be disposed along the second area 120. The second area 120 may be an area corresponding to an edge of the top cover 30.

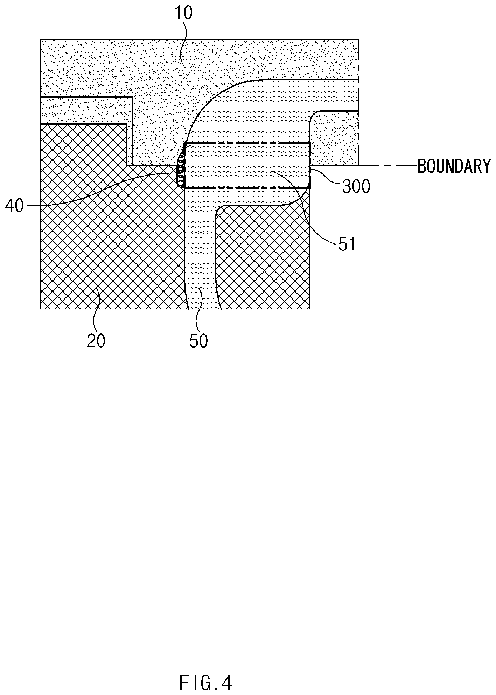

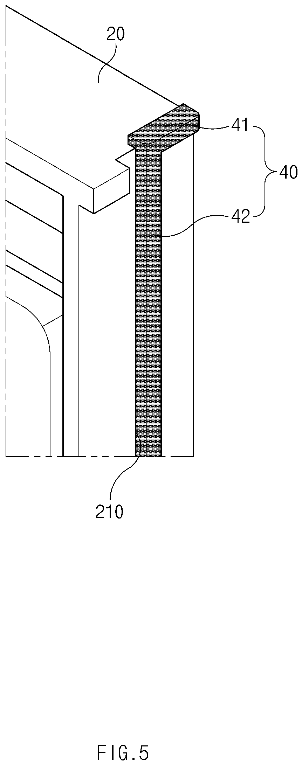

FIG. 4 is a plan view illustrating an arrangement relationship between the first sealing member 40 and the second sealing member 50 according to an embodiment of the present invention, and FIG. 5 is a perspective view illustrating a configuration of the first sealing member 40 according to an embodiment of the present invention. The above description may be equally or similarly applied below.

The first sealing member 40 and the second sealing member 50 may include an overlapping area. For example, when viewed from above, the first sealing member 40 and the second sealing member 50 may define a contact area 300 that is the overlapping area.

The first sealing member 40 may be in contact with the second sealing member 50. The first sealing member 40 and the second sealing member 50 may be in contact with each other to suppress movement of the moisture, etc., thereby improving the sealing effect. In addition, if the contact area 300 between the first sealing member 40 and the second sealing member 50 is large, the movement of the moisture, etc. may be further suppressed to improve the sealing effect to a certain extent.

The first sealing member 40 may extend along a boundary of each of the side cover 10 and the front cover 20. For example, the first sealing member 40 may include a portion extending along the boundary of each of the side cover 10 and the front cover 20 on the contact area 300 that is in contact with the second sealing member 50.

The second sealing member 50 may include an expansion part 51. For example, the extension part 51 may have a shape that is expanded to cover the first sealing member 40 when viewed from above. The expansion part 51 may cover the entire first sealing member 40 or a portion of the first sealing member 40 when viewed from above. When viewed from above, an area covered by the extension part 51 of the first sealing member 40 may correspond to the contact area 300.

The first sealing member 40 may include portions having cross-sectional areas different from each other. For example, the first sealing member 40 may include a first portion 41 having a first cross-sectional area and a second portion 42 having a second cross-sectional area less than the first cross-sectional area. Specifically, the first portion 41 may be disposed at a side of the contact area 300 that is in contact with the second sealing member 50 and may have a first cross-sectional area. The second portion 42 may extend from the first portion 41 toward a side opposite to the side at which the second sealing member 50 is disposed and may have a second cross-sectional area that is less than the first cross-sectional area. As described above, the cross-sectional area of the first portion 41 may increase on the area on which the side cover 10, the front cover 20, and the top cover 30 meet each other to improve the sealing effect at the three surface-coupled portion.

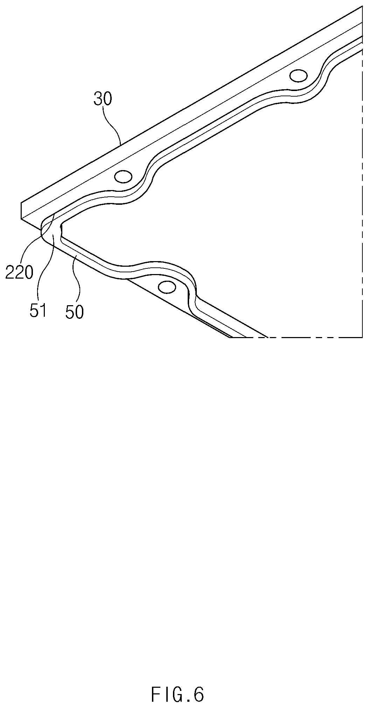

FIG. 6 is a perspective view illustrating a configuration of the second sealing member 50 according to an embodiment of the present invention. The above description may be equally or similarly applied below.

The second sealing member 50 may include an expansion part 51. For example, the second sealing member 50 may be disposed along an edge area of the top cover 30, and an expansion part 51 for increasing in contact area with the first sealing member 40 may be disposed on an edge area of the second sealing member 50. A shape of the extension 51 may not be particularly limited.

The second sealing member 50 may be mounted in the second mounting groove 220 of the top cover 30. For example, the top cover 30 may be provided with a second mounting groove 220 in which the second sealing member 50 is mounted. In addition, the second mounting groove 220 may have a shape corresponding to that of the second sealing member 50.

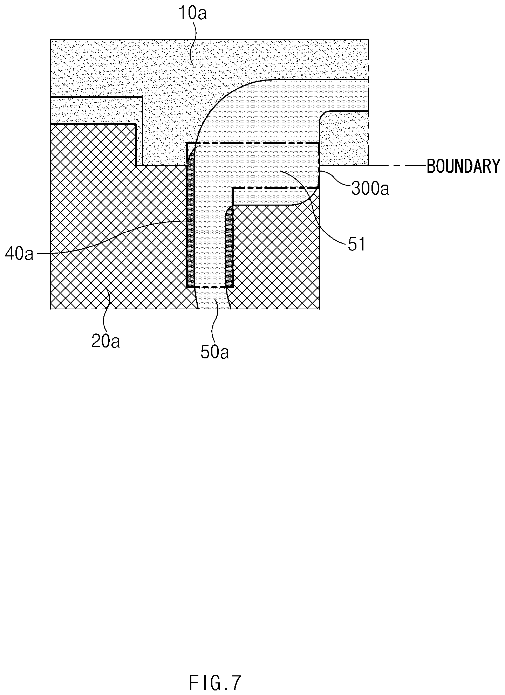

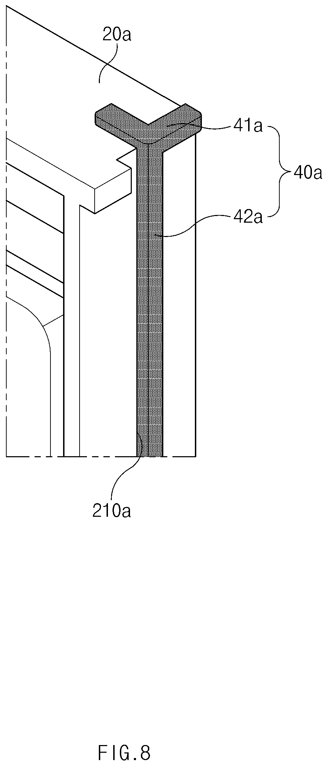

FIG. 7 is a plan view illustrating an arrangement relationship between a first sealing member 40a and a second sealing member 50a according to another embodiment of the present invention. FIG. 8 is a perspective view illustrating a configuration of the first sealing member 40a according to another embodiment of the present invention. The above description may be equally or similarly applied below.

The first sealing member 40a may further extend along the second sealing member 50a. For example, the first sealing member 40a may include a portion further extending at a contact area 300a that is in contact with the second sealing member 50a in a direction crossing a boundary between a side cover 10a and a front cover 20a. In this case, the extending portion may extend further along the second sealing member 50a to increase in contact area.

The first sealing member 40a may include a first portion 41a and a second portion 42a. For example, a portion of the first sealing member 40a, which is in contact with the second sealing member 50a, may be the first potion 41a, and a portion of the first sealing member 40a, which extends to a side opposite to the side at which the second sealing member 50a is disposed may be the second portion 42a. The first portion 41a may have a shape such as "L". As described above, the first portion 41a may further extend from an area on which the side cover 10, the front cover 20, and the top cover 30 meet each other in the direction crossing the boundary to increase in contact area 300a and also additionally block a moving path of moisture, thereby maximizing a sealing effect on a three surface-coupled portion.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

1: Battery pack
2: Internal space
10, 10a: Side cover
20, 20a: Front cover
30: Top cover
40, 40a: First sealing member
41, 41a: First portion
42, 42a: Second portion
50, 50a: Second sealing member
51, 51a: Extension part
110: First area
120: Second area
210: First mounting groove
220: Second mounting groove
300, 300a: Contact area

## Claims

1. A battery pack comprising:
a side cover;
a front cover coupled to the side cover in a direction crossing the side cover;
a top cover coupled to an upper portion of each of the side cover and the front cover;
a first sealing member disposed along a first area that is a coupling area of the side cover and the front cover; and
a second sealing member disposed along a second area that is a coupling area between the side and front covers and the top cover,
wherein the first sealing member extends at a contact area with the second sealing member along a boundary between the side cover and the front cover.

2. The battery pack of claim 1, wherein the first sealing member further extends at the contact area that is in contact with the second sealing member along the second sealing member while crossing the boundary between the side cover and the front cover.

3. The battery pack of claim 1, wherein the second sealing member comprises an expansion part expanded to cover the first sealing member when viewed from above.

4. The battery pack of claim 1, wherein the side cover, the front cover, and the top cover are configured to define an internal space in which the battery is accommodated, and
the first sealing member extends toward the internal space.

5. The battery pack of claim 1, wherein the first sealing member comprises:
a first portion disposed at a side of the contact area that is in contact with the second sealing member and having a first cross-sectional area; and
a second portion extending from the first portion toward a side opposite to the side at which the second sealing member is disposed and having a second cross-sectional area less than the first cross-sectional area.

6. The battery pack of claim 1, wherein, when viewed from above, the first sealing member and the second sealing member comprise an overlapping area.

7. The battery pack of claim 1, wherein at least one of the side cover or the front cover comprises a first mounting groove provided so that the first sealing member is mounted therein and having a shape corresponding to that of the first sealing member.

8. The battery pack of claim 1, wherein the top cover comprises a second mounting groove provided so that the second sealing member is mounted and having a shape corresponding to that of the second sealing member.

9. The battery pack of claim 1, wherein the first sealing member has hardness less than that of the second sealing member.

10. The battery pack of claim 1, wherein the hardness of the first sealing member is different from the hardness of the second sealing member.
